# EUROPÄISCHE PATENTSCHRIFT

(11) **EP 0 671 031 B1**
(45) Veröffentlichungstag und Bekanntmachung des Hinweises auf die Patenterteilung: **21.01.1998**
(21) Anmeldenummer: 94926092.1
(22) Anmeldetag: 10.09.1994
(51) Int. Cl.: G06F 11/00, G06F 1/24

(54) **MIKRORECHNER MIT ÜBERWACHUNGSSCHALTUNG**
MICROCOMPUTER WITH MONITORING CIRCUIT
MICRO-ORDINATEUR POURVU D'UN CIRCUIT DE SURVEILLANCE

(30) Priorität: 25.09.1993 DE 4332769
(43) Veröffentlichungstag der Anmeldung: 13.09.1995
(73) Patentinhaber: ROBERT BOSCH GMBH, 70442 Stuttgart (DE)
(72) Erfinder: ZIMMERMANN, Jürgen, D-71665 Vaihingen (DE); GROTE, Walter, D-71706 Markgroeningen (DE)
(86) Internationale Anmeldenummer: DE9401043
(87) Internationale Veröffentlichungsnummer: WO9508802

(56) Entgegenhaltungen:
- EP-A- 0 551 870
- GB-A- 2 177 241
- US-A- 5 119 381

## Beschreibung

### Stand der Technik

Der erfindungsgemäße Mikrorechner geht aus von einem Mikrorechner nach der Gattung des Hauptanspruchs. Es ist schon ein Mikrorechner aus dem Datenblatt MC 68 F 333 TS/D, Motorola 1992, bekannt, der außer der Zentraleinheit einen programmierbaren, nicht flüchtigen Speicher (Flash-EEPROM), Ein-/Ausgabe-Komponenten, einen Überwachungsschaltkreis (Watchdog-Timer), auch einen flüchtigen Speicher (Code-RAM) aufweist, in den Programmdaten einschreibbar sind, auf die der Befehlszähler der Zentraleinheit zugreifen kann. Alle genannten Komponenten sind auf einem Chip integriert. Der Mikrorechner ist so ausgeführt, daß er sowohl auf Programmdaten, die sich im programmierbaren, nicht flüchtigen Speicher befinden zugreifen kann, als auch, daß er ein Programm, das sich im flüchtigen Speicher befindet, abarbeiten kann. In beiden Fällen ist der Überwachungsschaltkreis aktiviert, d. h., es muß sichergestellt sein, daß der Uberwachungsschaltkreis bei regulärem Programmablauf zeitgerecht zurückgesetzt wird, da sonst der Uberwachungsschaltkreis ein Reset des Mikrorechners durchführt. Nachteilig an diesem Mikrorechner ist, daß durch willkürliche Änderungen des Speicherinhalts im flüchtigen Speicher (z. B. durch EMV-Störstrahlung) eine Programmschleife entstehen kann, in der der Uberwachungsschaltkreis zeitgerecht zurückgesetzt wird, obwohl der Programmablauf irregulär ist.

### Vorteile der Erfindung

Der erfindungsgemäße Mikrorechner mit den kennzeichnenden Merkmalen des Hauptanspruchs hat demgegenüber den Vorteil, daß in ihm eine Trennung zwischen Abarbeitung eines Programms im programmierbaren, nichtflüchtigen Speicher (ROM-Mode) und Abarbeitung eines Programms im flüchtigen Speicher (RAM-Mode) vorgenommen ist. Die Trennung besteht darin, daß eine Rücksetzung des Überwachungsschaltkreises in dem zweiten Betriebszustand (RAM-Mode) gar nicht möglich ist. Eine Rücksetzung des Überwachungsschaltkreises kann nur in dem ersten Betriebszustand (ROM-Mode) stattfinden. Das Entstehen einer EMV-störungsbedingten Programmschleife, in der eine zeitgerechte Rücksetzung des Überwachungsschaltkreises trotz eines gestörten Programmablaufes auftritt, ist dadurch erschwert.

Durch die in den Unteransprüchen aufgeführten Maßnahmen sind vorteilhafte Weiterbildungen und Verbesserungen des im Hauptanspruch angegebenen Mikrorechners möglich.

So ist es einerseits vorteilhaft, daß die Auswahl der mindestens zwei unterschiedlichen Betriebszustände des Mikrorechners implizit durch eine Decodierung des Adreßraumes erfolgt. Dadurch wird der Programmieraufwand gering gehalten. Andererseits ist es vorteilhaft, wenn die Auswahl der mindestens zwei unterschiedlichen Betriebszustände durch eine explizite Umschaltung von Betriebsarten des Mikrorechners erfolgt. Dadurch wird eine stäkere Trennung beider Betriebszustände erreicht, so daß ein Programmierer eine bessere Kontrolle der Betriebszustände erhält.

Weiterhin ist es besonders vorteilhaft, daß der Mikrorechner einen Programmablaufzähler enthält. Dieser Zähler ist mindestens dann aktiviert, wenn der Mikrorechner in dem zweiten Betriebszustand (RAM-Mode) arbeitet. Durch den Programmablaufzähler, der bei ordnungsgemäßem Programmablauf jeweils nach einer bestimmten Anzahl von Programmbefehlen definiert gesetzt wird, wird eine zusätzliche Kontrolle des Programmablaufes möglich.

Weiterhin vorteilhaft ist, daß in dem Mikrorechner Mittel enthalten sind, die den Stand des Programmablauf zählers überprüfen und die Abgabe von Überwachungssignalen unterdrücken, wenn die Überprüfung des Programmablauf zählers einen irregulären Programmablauf ergibt. Dadurch ist die Entstehung einer EMV-störungsbedingten Programmschleife, bei der trotz irregulären Programmablaufes Überwachungssignale zeitgerecht abgegeben werden, praktisch ausgeschlossen.

Für eine einfache Überprüfung des Standes des Programmablaufzählers ist es vorteilhaft, daß der Mikrorechner einen Referenzzähler aufweist, der vor jeder Überprüfung des Standes des Programmablaufzählers inkrementiert wird, daß er Mittel aufweist, die den aktuellen Zählerstand des Programmablaufzählers mit dem aktuellen Zählerstand des Referenzzählers vergleichen und daß er bei Ungleichheit der Zählerstände von Programmablaufzähler und Referenzzähler einen irregulären Programmablauf feststellt.

Für eine einfache Realisierung einer Unterdrückung von Überwachungssignalen ist es sinnvoll, in dem Mikrorechner ein Konfigurationsregister vorzusehen, in dem bei Wechsel des Betriebszustands (von ROM-Mode nach RAM-Mode) ein Flag im Konfigurationsregister gesetzt wird, wodurch eine elektronische Einrichtung derart geschaltet wird, daß sie die Leitung zur Übertragung von Überwachungssignalen sperrt.

### Zeichnung

Ein Ausführungsbeispiel der Erfindung ist in der Zeichnung dargestellt und in der nachfolgenden Beschreibung näher erläutert. Es zeigen Figur 1 ein grobes Blockschaltbild für ein Ausführungsbeispiel der Erfindung; Figur 2 ein Blockschaltbild eines erfindungsgemäßen Mikrorechners; Figur 3 einen detaillierteren Ausschnitt der Zentraleinheit des erfindungsgemäßen Mikrorechners; Figur 4 ein erstes Struktogramm für ein Programm zur Ausführung in dem erfindungsgemäßen Mikrorechner; Figur 5 ein zweites Struktogramm für ein Programm zur Ausführung in dem erfindungsgemäßen Mikrorechner und Figur 6 ein drittes Struktogramm für ein Programm zur Ausführung in dem erfindungsgemäßen Mikrorechner.

### Beschreibung der Erfindung

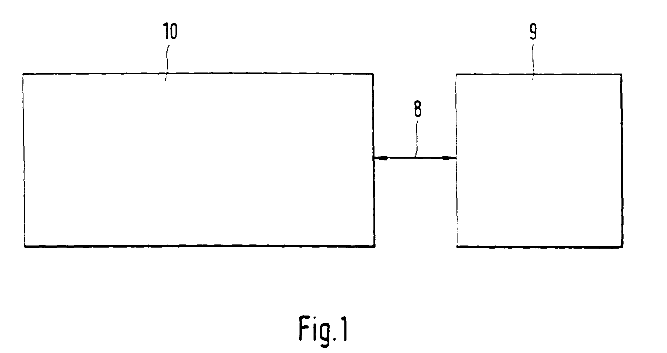

In Figur 1 bezeichnet die Bezugszahl 10 einen Mikrorechner. An den Mikrorechner 10 ist ein Entwicklungsrechner 9 angeschlossen. Die Verbindung zwischen Mikrorechner 10 und Entwicklungsrechner 9 ist mit Hilfe einer seriellen Datenübertragungsleitung 8 realisiert. Das Ausführungsbeispiel bezieht sich auf das Gebiet der Applikation von Steuergeräten. Hierbei soll das Steuergerät ein Motorsteuergerät darstellen. An dem Steuergerät ist der Einfachheit halber nur der Mikrorechner 10 dargestellt. Während der Applikationsphase der Entwicklung eines Steuergerätes sollen insbesondere die optimalen Programmabläufe für das Steuergerät ermittelt werden. Dazu wird der Programmablauf des Steuergerätes mitunter mehrfach geändert. Die Auswirkungen der Änderungen werden dann durch Testläufe des Steuergerätes ermittelt. Die Änderungen der Programmabläufe beziehen sich vorwiegend auf bestimmte Programmteile des Programmablaufs. Es muß also nicht jedesmal ein vollständig neues Programm in den Speicher des Mikrorechners einprogrammiert werden. Besitzt das Steuergerät bzw. der Mikrorechner des Steuergerätes ein Code-RAM, so kann dieses Code-RAM vorteilhaft für die Applikation ausgenutzt werden. In dieses Code-RAM können nämlich auf einfache Art und Weise neue Programme eingeschrieben werden, ohne daß dazu längere Programmiervorgänge von programmierbaren, nicht flüchtigen Speichern durchgeführt werden müßten. Der Aufbau eines solchen Motor-Steuergerätes ist an sich aus dem Stand der Technik bekannt. Das Motor-Steuergerät berechnet auf der Basis von Eingangsgrößen des Motors z. B. die Einspritzzeiten sowie die Zündzeitpunkte für die einzelnen Zylinder der Brennkraftmaschine. Die Berechnung dieser Steuerwerte geschieht nach an sich bekannten Rechenalgorithmen. Es gibt jedoch verschiedene Möglichkeiten für die Rechenalgorithmen. Um hier den optimalen Rechenalgorithmus für den Motor zu ermitteln, soll das hier beschriebene Applikationssystem eingesetzt werden. Der Applikateur versucht, bei der Optimierung des Programmablaufs für das Steuergerät einen Kompromiß zwischen der Genauigkeit der Steuerwertberechnung einerseits und des hierfür benötigten Rechenzeitbedarfs andererseits zu finden.

Um möglichst genaue Rechenergebnisse zu erzielen, ist es oftmals sinnvoll, möglichst viele Parameter der Brennkraftmaschine (wie z. B. Drehzahl, Motorlast, Motortemperatur, Lufttemperatur, Batteriespannung etc.) heranzuziehen. Andererseits reichen für die Berechnung von Einspritzzeiten und Zündzeitpunkten als Parameter die Motorlast und die Drehzahl schon aus. Häufig werden erste Steuerwerte schon aus diesen beiden Größen berechnet. Um weitere Parameter in die Berechnung einfließen zu lassen, findet dann oftmals nur eine Korrektur der vorausberechneten Steuerwerte statt. Das Ausführungsbeispiel betrifft die Korrektur der grob vorausberechneten Steuerwerte für Zündwinkel und Einspritzzeiten für die einzelnen Zylinder einer Sechs-Zylinder-Brennkraftmaschine aufgrund der Motortemperatur als zusätzlichem Betriebsparameter.

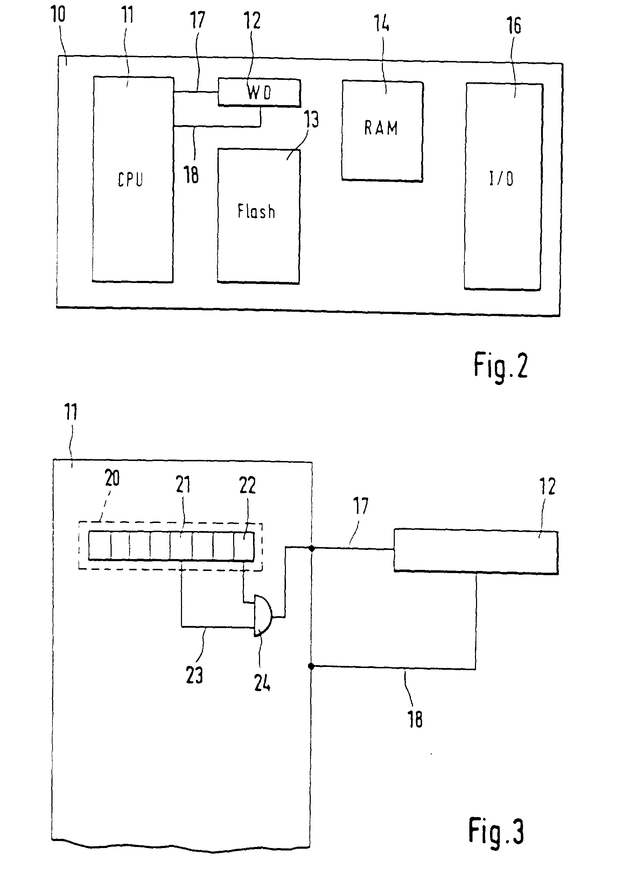

Der Mikrorechner 10 des Steuergerätes besitzt einen Aufbau, wie er in Figur 2 dargestellt ist. Darin bezeichnet die Bezugszahl 11 die CPU des Mikrorechners. Die Bezugszahl 12 bezeichnet einen Überwachungsschaltkreis, der auch unter dem Begriff Watchdog-Timer in der Literatur bekannt geworden ist. Mit der Bezugszahl 13 ist ein programmierbarer, nicht flüchtiger Speicher bezeichnet. Die Bezugszahl 14 bezeichnet einen flüchtigen Speicher (Code-RAM), der als Besonderheit aufweist, daß er als Programmspeicher für die CPU 11 konfiguriert werden kann. Die Bezugszahl 16 bezeichnet schließlich die Ein-/Ausgabe-Komponenten des Mikrorechners. Hierin soll auch eine serielle Schnittstelle enthalten sein.

Die Figur 3 zeigt einen detaillierteren Ausschnitt der Zentraleinheit 11 des Mikrorechners 10. In der Zentraleinheit 11 ist ein Konfigurationsregister 20 vorgesehen. Das Konfigurationsregister 20 besteht aus einer Anzahl von Flags. Zwei Flags sind dabei besonders hervorgehoben. Das Flag 21 ist immer dann gesetzt, wenn der Mikrorechner 10 in dem ersten Betriebszustand (ROM-Mode) arbeitet, d. h., daß er das Programm im nicht flüchtigen Speicher 13 abarbeitet. Arbeitet der Mikrorechner hingegen in dem zweiten Betriebszustand (RAM-Mode), so ist das Flag 21 nicht gesetzt. Der Zustand des Flags 21 ist über eine Leitung 23 zu einem ersten Eingang eines UND-Gatters 24 geführt. Der Zustand des Flags 22 wird dem zweiten Eingang des UND-Gatters 24 zugeführt. Das Flag 22 wird mit Hilfe eines Unterprogramms des Mikrorechners 10 nur kurzzeitig gesetzt, nämlich immer dann, wenn ein Überwachungssignal an den Uberwachungsschaltkreis 12 abgegeben werden soll. Dieses Signal kann nur dann an den Uberwachungsschaltkreis 12 gelangen, wenn das Flag 21 gesetzt ist. Ansonsten sperrt das UND-Gatter 24 diese Signale ab.

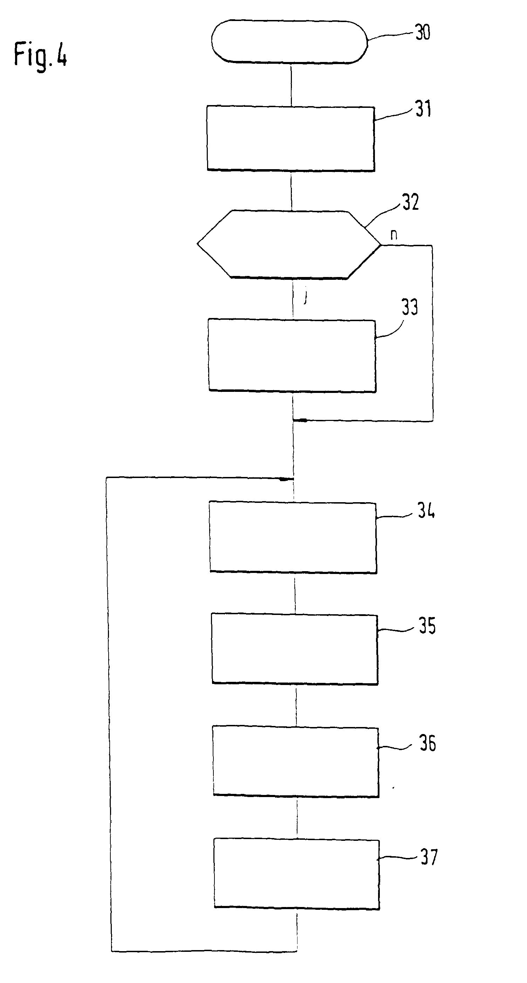

In dem Uberwachungsschaltkreis 12 läuft während des Betriebes des Mikrorechners 10 ein Zeitzähler hoch. Sobald dieser Zeitzähler einen Überlauf erzeugt, wird durch die interne Logik des Überwachungsschaltkreises 12 eine Rücksetzung des Mikrorechners 10 veranlaßt. In Figur 3 wird das Rücksetzsignal über die Leitung 18 an die Zentraleinheit 11 abgegeben. Der Uberwachungsschaltkreis 12 funktioniert also derart, daß der interne Zeitzähler sukzessive zurückgesetzt werden muß, bevor der Zeitzähler einen Überlauf produziert. Nur wenn diese Rücksetzung zeitgerecht erfolgt, unterbleibt die Rücksetzung des Mikrorechners 10. Es muß daher von dem Programmierer Sorge getragen werden, daß bei einem regulären Programmablauf eine zeitgerechte Rücksetzung des Überwachungsschaltkreises 12 erfolgt. Hierzu fügt der Programmierer an definierte Programmstellen entsprechende Befehle in das Programm ein. Der Programmablauf im Mikrorechner 10 wird nachfolgend anhand der Figuren 4, 5 und 6 näher erläutert.

In Figur 4 bezeichnet die Bezugszahl 30 den Programmstart. Nach dem Programmstart 30 findet eine Initialisierung des Mikrorechners 10 im Programmschritt 31 statt. In der Abfrage 32 wird abgefragt, ob der externe Entwicklungsrechner 9 an den Mikrocomputer 10 angeschlossen ist. Lautet das Abfrageergebnis ja, so wird im Programmschritt 33 eine Applikationsfunktion in das Code-RAM 14 des Mikrorechners 10 geladen. War der Entwicklungsrechner 9 nicht an den Mikrorechner 10 angeschlossen, so unterbleibt der Programmschritt 33. Im Programmschritt 34 findet dann die Betriebsparametererfassung für den Steuervorgang statt. Hierbei wird also unter anderem Motordrehzahl und Motorlast ermittelt. Im Programmschritt 35 werden dann die groben Steuerwerte aufgrund der erfaßten Betriebsparameter Motordrehzahl und Motorlast berechnet. Im Programmschritt 36 wird dann die Applikationsfunktion, die zuvor in das Code-RAM 14 geladen wurde, abgearbeitet. Anschließend erfolgt im Programmschritt 37 die Steuerfunktions-Ausführung. Danach ist ein erster Rechenzyklus abgeschlossen, und der nächste Rechenzyklus wird mit Programmschritt 34 gestartet.

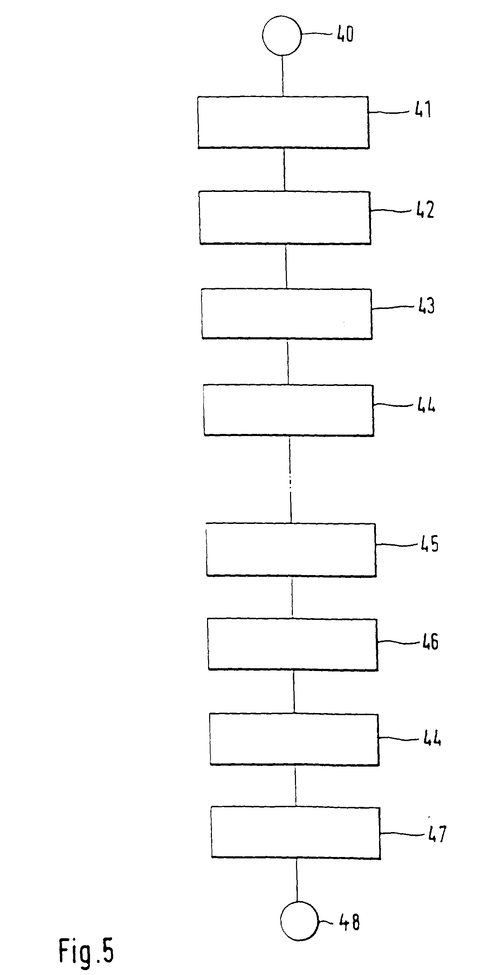

In Figur 5 ist ein detaillierteres Struktogramm der Applikationsfunktion dargestellt. Mit der Bezugszahl 40 ist der Aufruf der Applikationsfunktion angedeutet. Als erstes wird dann im Programmschritt 41 eine Umschaltung des Betriebszustandes (vom ROM-Mode zum RAM-Mode) durchgeführt. Dabei wird das Flag 21 im Konfigurationsregister 20 zurückgesetzt. Sodann erfolgt im Programmschritt 42 die Korrektur der ersten Steuerwerte (Zündzeitpunkt und Einspritzzeit für Zylinder 1 der Brennkraftmaschine) aufgrund der zusätzlichen Applikationsfunktion. Nach dem Programmschritt 42 wird im Programmschritt 43 ein Programmablaufzähler auf "1" gesetzt. Anschließend erfolgt im Programmschritt 44 der Unterprogrammaufruf für die Rücksetzung des Überwachungsschaltkreises 12. Nach diesem Unterprogrammaufruf 44 findet dann als nächstes die Korrektur der Steuerwerte 2 (Zündzeitpunkt und Einspritzzeit für Zylinder 2 der Brennkraftmaschine) statt. Dieses ist in der Figur 5 nicht näher dargestellt, da sich praktisch die Programmschritte 42, 43 und 44 hierfür wiederholen. Es wurde deshalb auf eine gesonderte Darstellung dieser Programmschritte verzichtet. Schließlich wird nach der Korrektur der Steuerwerte 1 - 5 im Programmschritt 45 die Korrektur der Steuerwerte 6 durchgeführt. Danach wird wieder im Programmschritt 46 der Programmablaufzähler neu gesetzt und im Programmschritt 44 das Unterprogramm zur Rücksetzung des Überwachungsschaltkreises 12 aufgerufen. Wird dieses Unterprogramm korrekt abgearbeitet, so erfolgt anschließend im Programmschritt 47 die Umschaltung von dem RAM-Mode zum ROM-Mode. Die Applikationsfunktion endet mit dem Rücksprung 48 zum Hauptprogramm.

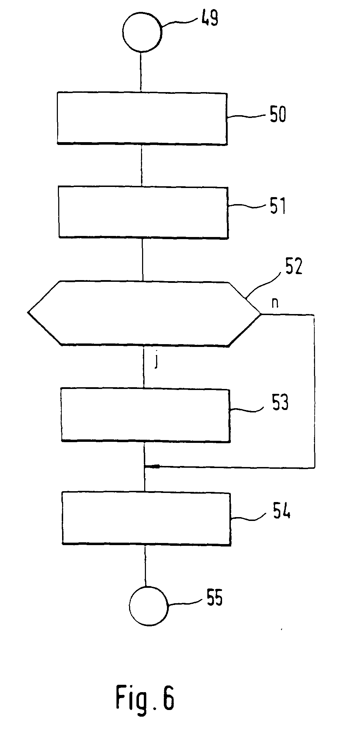

Das Unterprogramm, das die Rücksetzung des Überwachungsschaltkreises bewirkt, wird nachfolgend anhand der Figur 6 erläutert. Nach dem Aufruf des Unterprogramms 49 erfolgt im Programmschritt 50 eine Umschaltung des Betriebszustands des Mikrorechners 10, und zwar derart, daß von dem RAM-Mode in den ROM-Mode umgeschaltet wird. Dabei wird das Flag 21 im Konfigurationsregister 20 gesetzt. Anschließend wird in Abfrage 52 geprüft, ob der Programmablaufzähler den regulären Programmablauf anzeigt. Dazu wird ein Referenzzähler verwendet, der bei Aufruf der Applikationsfunktion im Programmschritt 36 auf einen Anfangswert gesetzt wird und jedesmal bei Aufruf des WD-Refreshs inkrementiert wird. Es werden dann beide Zählerstände miteinander verglichen. Wenn die beiden Zählerstände ungleich sind, liegt ein irregulärer Programmablauf vor. Es ist ebenfalls denkbar, daß hier ein zusätzlicher Zeitzähler überwacht wird. Wurde der Zählerstand des Programmablaufzählers innerhalb gewisser Zeitgrenzen nicht verändert, so kann dann auf einen fehlerhaften Programmablauf geschlossen werden. Wird in Abfrage 52 der ordnungsgemäße Programmablauf festgestellt, so folgt in Programmschritt 53 die Rücksetzung des Überwachungsschaltkreises 12. Dabei wird das Flag 22 im Konfigurationsregister 20 für eine bestimmte Zeit gesetzt und anschließend wieder zurückgesetzt. Der so entstehende Impuls wird über das UND-Gatter 24 und die Verbindungsleitung 17 an den Uberwachungsschaltkreis 12 weitergegeben. Anschließend erfolgt dann im Programmschritt 54 eine erneute Umschaltung des Betriebszustands des Mikrorechners 10, nämlich von dem ROM-Mode zurück in den RAM-Mode. Das Unterprogramm zur Rücksetzung des Überwachungsschaltkreises 12 wird mit dem Rücksprung 55 beendet. War in Abfrage 52 ein irregulärer Programmablauf erkannt worden, so wird der Programmschritt 53 ausgelassen, so daß keine Rücksetzung des Überwachungsschaltkreises 12 erfolgt. Nach kurzer Zeit wird dann der Überwachungsschaltkreis 12 den Mikrorechner 10 vollständig zurücksetzen, um so einen sicheren Zustand herbeizuführen.

Der erfindungsgemäße Mikrorechner 10 bietet nicht nur Vorteile für die Applikation von Kraftfahrzeug-Steuergeräten. Der sichere Betrieb des Mikrorechners ist immer dann gewährleistet, wenn der Mikrorechner ein Programm, das sich im Code-RAM 14 des Mikrorechners 10 befindet, abarbeitet. Ein weiteres Anwendungsbeispiel dafür ist die Programmierung des internen programmierbaren, nicht flüchtigen Speichers 13. Auch hierfür wird das Code-RAM 14 ausgenutzt. In dem Code-RAM ist dann der Programmieralgorithmus abgelegt. Die zu programmierenden Daten werden von einem angeschlossenen externen Programmiergerät an den Mikrorechner 10 übertragen. Sollte der Zwang zum zyklischen Verlassen des RAM-Modes störend sein, könnte durch zusätzliche Hardwaremaßnahmen ein Anhalten des Überwachungsschaltkreises 12 vorgesehen werden. So könnte z. B. während der Programmierung des programmierbaren, nichtflüchtigen Speichers 13 (EEPROM) im RAM-Mode der Überwachungsschaltkreis 12 über den separaten Programmierpin angehalten werden.

Für die Erfindung ist es nicht zwingend erforderlich, daß die einzelnen Komponenten des Mikrorechners auf einem Chip integriert sind. Sie können auch auf separaten Chips untergebracht sein.

Für die Erfindung ist es auch nicht zwingend erforderlich, daß im Mikrorechner 10 eine Umschaltung der Betriebszustände explizit vorgesehen ist. Die Unterscheidung der Betriebszustände kann auch implizit, z.B. durch eine Adreßdecodierung erfolgen.

Weiterhin könnte bei der Feststellung eines irregulären Programmablaufs nach dem Programmschritt 52 alternativ auch direkt eine Rücksetzung des Mikrorechners 10 ausgelöst werden.

## Patentansprüche

1. Mikrorechner mit einer Zentraleinheit, mit einem nicht flüchtigen Speicher und einem flüchtigen Speicher, wobei nichtflüchtiger Speicher und flüchtiger Speicher als Programmspeicher verwendbar sind, so daß in sie von der Zentraleinheit ausführbare Programme einlesbar sind, mit einer Ein-/Ausgabeeinheit, mit einer Überwachungsschaltung, die eine Rücksetzung des Mikrorechners bewirkt, wenn sie nach einer vorbestimmten Zeit kein Überwachungssignal empfängt, dadurch gekennzeichnet, daß in dem Mikrorechner (10) mindestens zwei unterschiedliche Betriebszustände möglich sind, wobei der Mikrorechner (10) in dem ersten Betriebszustand ein Programm im nicht flüchtigen Speicher (13) abarbeitet und in dem zweiten Betriebszustand ein Programm im flüchtigen Speicher (14) abarbeitet und daß der Mikrorechner (10) Mittel zur Unterdrückung von Überwachungssignalen enthält, die immer dann aktiv sind, wenn der Mikrorechner (10) in dem zweiten Betriebszustand arbeitet.

2. Mikrorechner nach Anspruch 1, dadurch gekennzeichnet, daß die Auswahl der mindestens zwei unterschiedlichen Betriebszustände des Mikrorechners (10) implizit durch eine Decodierung des Adreßraums erfolgt.

3. Mikrorechner nach Anspruch 1, dadurch gekennzeichnet, daß die Auswahl der mindestens zwei unterschiedlichen Betriebszustände durch eine explizite Umschaltung von Betriebsarten des Mikrorechners (10) erfolgt.

4. Mikrorechner nach einem der vorhergehenden Ansprüche, dadurch gekennzeichnet, daß er einen Programmablauf zähler enthält, der mindestens dann aktiviert wird, wenn der Mikrorechner (10) in dem zweiten Betriebszustand arbeitet, und der bei ordnungsgemäßem Programmablauf jeweils nach einer bestimmten Folge von Programmbefehlen definiert gesetzt wird, daß er Mittel enthält, die den Stand des Programmablauf zählers überprüfen und die Ausgabe von Überwachungssignalen unterdrücken, wenn die Überprüfung des Programmablauf zählers einen irregulären Programmablauf ergibt.

5. Mikrorechner nach Anspruch 4, dadurch gekennzeichnet, daß er einen Referenzzähler aufweist, der vor jeder Überprüfung des Standes des Programmablauf zählers inkrementiert wird, daß er Mittel aufweist, die den aktuellen Zählerstand des Programmablaufzählers mit dem aktuellen Zählerstand des Referenzzählers vergleichen und daß er bei Ungleichheit der Zählerstände von Programmablaufzähler und Referenzzähler einen irregulären Programmablauf feststellt.

6. Mikrorechner nach einem der vorhergehenden Ansprüche, dadurch gekennzeichnet, daß er ein Konfigurationsregister (20) aufweist, daß er Mittel aufweist, die bei Wechsel des Betriebszustandes von dem ersten Betriebszustand in den zweiten Betriebszustand ein Flag (21) im Konfigurationsregister (20) setzen, wodurch eine elektronische Einrichtung (24) derart geschaltet wird, daß sie die Leitung (17) zur Übertragung des Überwachungssignals an die Überwachungsschaltung (12) sperrt.

## Claims

1. Microcomputer having a central processing unit, a non-volatile memory and a volatile memory, it being possible for the non-volatile memory and the volatile memory to be used as program memories, so that programs which can be executed by the central processing unit can be read into them, having an input/output unit and having a monitoring circuit, which effects a resetting of the microcomputer whenever it does not receive any monitoring signal for a predetermined time, wherein at least two different operating states are possible in the microcomputer (10), the microcomputer (10) executing a program in the non-volatile memory (13) in the first operating state and executing a program in the volatile memory (14) in the second operating state, and in that the microcomputer (10) includes means for suppressing monitoring signals which are always active if the microcomputer (10) is operating in the second operating state.

2. Microcomputer according to Claim 1, characterized in that the selection of the at least two different operating states of the microcomputer (10) takes place implicitly by a decoding of the address space.

3. Microcomputer according to Claim 1, characterized in that the selection of the at least two different operating states takes place by an explicit switching-over of operating modes of the microcomputer (10).

4. Microcomputer according to one of the preceding claims, characterized in that it includes a program flow counter which is activated at least whenever the microcomputer (10) is operating in the second operating state, and which, in the case of regular program flow, is respectively set in a defined way after a certain sequence of program instructions and in that it includes means which check the reading of the program flow counter and suppress the output of monitoring signals if the checking of the program flow counter indicates an irregular program flow.

5. Microcomputer according to Claim 4, characterized in that it has a reference counter, which is incremented before each checking of the reading of the program counter, in that it has means which compare the current counter reading of the program flow counter with the current counter reading of the reference counter and in that it detects an irregular program flow if the counter readings of program flow counter and reference counter do not match.

6. Microcomputer according to one of the preceding claims, characterized in that it has a configuration register (20) and in that it has means which, if there is a change of operating state from the first operating state to the second operating state, set a flag (21) in the configuration register (20), whereby an electronic device (24) is switched in such a way that it blocks the line (17) for the transmission of the monitoring signal to the monitoring circuit (12).

## Revendications

1. Micro-ordinateur avec une unité centrale, comprenant une mémoire non volatile et une mémoire volatile, la mémoire non volatile et la mémoire volatile pouvant être utilisées comme mémoires de programmes, de telle sorte qu'on puisse enregistrer dedans des programmes pouvant être exécutés par l'unité centrale, comprenant une unité d'entrée et de sortie de données, et comprenant un circuit de contrôle qui provoque la remise à zéro du micro-ordinateur quand il ne reçoit plus de signal de contrôle au bout d'un temps déterminé de signal de contrôle,
caractérisé en ce que
- dans le micro-ordinateur (10) il est possible d'avoir au moins deux états différents de fonctionnement, le micro-ordinateur (10) prenant en charge, dans le premier état de fonctionnement, un programme dans la mémoire non volatile (13) et, dans le second état de fonctionnement, un programme dans la mémoire volatile (14), et
- le micro-ordinateur (10) contient des moyens pour supprimer des signaux de contrôle, qui sont toujours actifs quand le micro-ordinateur (10) fonctionne dans le second état de fonctionnement.

2. Micro-ordinateur selon la revendication 1,
caractérisé en ce que
le choix d'au moins les deux états différents de fonctionnement du micro-ordinateur (10) a lieu implicitement par un décodage de la partie d'adresse.

3. Micro-ordinateur selon la revendication 1,
caractérisé en ce que
le choix d'au moins les deux états différents de fonctionnement du micro-ordinateur (10) a lieu par une commutation explicite des modes de fonctionnement du micro-ordinateur (10).

4. Micro-ordinateur selon la revendication 1,
caractérisé en ce qu'
- il contient un compteur de déroulement de programme qui est activé au moins quand le micro-ordinateur (10) fonctionne dans le second état de fonctionnement, et qui est mis de façon définie respectivement dans une suite déterminée d'ordres de programme quand le programme se déroule convenablement, et
- il contient des moyens qui contrôlent l'état du compteur de déroulement de programme et interdisent la délivrance de signaux de contrôle quand le contrôle du compteur de déroulement de programme détecte un déroulement de programme irrégulier.

5. Micro-ordinateur selon la revendication 4,
caractérisé en ce qu'
- il présente un compteur de référence qui est incrémenté avant chaque contrôle de l'état du compteur de déroulement de programme
- il présente des moyens qui comparent l'état actuel du compteur de déroulement de programme à l'état actuel du compteur de référence, et
- il détermine, en cas d'inégalité entre les états du compteur de déroulement de programme et du compteur de référence, un déroulement irrégulier de programme.

6. Micro-ordinateur selon la revendication 4,
caractérisé en ce qu'
- il présente un registre de configurations (20), et
- il contient des moyens qui, en cas de changement de l'état de fonctionnement passant du premier état de fonctionnement au second état de fonctionnement, mettent une marque (21) dans le registre de configurations (20), grâce à quoi un système électronique (24) est branché d'une manière telle qu'il bloque la ligne (17) de transmission du signal de contrôle au circuit de contrôle (12).
